# EUROPÄISCHE PATENTSCHRIFT

(11) **EP 2 021 809 B1**
(45) Veröffentlichungstag und Bekanntmachung des Hinweises auf die Patenterteilung: **13.07.2016**
(21) Anmeldenummer: 07724724.5
(22) Anmeldetag: 28.04.2007
(51) Int. Cl.: G01P 1/02, B29C 45/14, B29C 45/00

(54) **INDUKTIVER SENSOR**
INDUCTIVE SENSOR
CAPTEUR INDUCTIF

(30) Priorität: 05.05.2006 DE 102006021018
(43) Veröffentlichungstag der Anmeldung: 11.02.2009
(73) Patentinhaber: WABCO GmbH, 30453 Hannover (DE)
(72) Erfinder: HÖFLER, Siegfried, 30165 Hannover (DE); SINGBARTL, Günther, 30161 Hannover (DE)
(74) Vertreter: Günther, Constantin
(86) Internationale Anmeldenummer: PCT/EP2007/003797
(87) Internationale Veröffentlichungsnummer: WO 2007/128449

(56) Entgegenhaltungen:
- EP-A- 1 400 331
- DE-C2- 19 518 157
- DE-U1- 8 532 178
- FR-A1- 2 669 736
- JP-A- 7 009 480
- JP-A- 9 288 020
- JP-A- 10 340 976
- JP-A- 60 027 134
- US-A- 3 838 372
- US-A- 4 829 245
- US-A- 5 226 221

## Beschreibung

Die Erfindung betrifft einen induktiven Sensor mit einer elektrischen Spulenbaugruppe gemäß dem Oberbegriff des Patentanspruchs 1.

Derartige Sensoren werden z. B. zur Sensierung von Drehgeschwindigkeiten von Fahrzeugrädern eingesetzt, etwa zur Erzeugung von Eingangssignalen für Antiblockiersysteme. Ein Sensor zur Sensierung von Drehgeschwindigkeiten ist z. B. aus der EP 0 384 014 B1 bekannt.

Bei derartigen Sensoren ist der Spulendraht zu in der Regel zwei elektrischen Anschlüssen zu führen, die zur Erzielung einer ausreichenden mechanischen Stabilität beispielsweise aus Blechstreifen gebildet werden. Der Spulendraht selbst besteht zur Ausnutzung des vorhandenen Bauraums aus relativ dünnem und somit bruchempfindlichem Draht. Zur Erhöhung der mechanischen Stabilität der Spulenbaugruppe wird diese daher bei gattungsgemäßen Sensoren zumindest zum Teil mit einer Umspritzmasse umspritzt. Hierbei wird in der Regel auch der Bereich der aus der Spulenwicklung zu den Anschlüssen hingeführten Drahtenden mit umspritzt. Aufgrund unterschiedlicher TemperaturAusdehnungskoeffizienten des Drahtmaterials, zum Beispiel Kupfer, und der Umspritzmasse kann es bei Temperaturwechseln zu Verspannungen zwischen dem Draht und der Umspritzmasse kommen, die im Falle extrem häufiger Temperaturwechsel zu einer Beschädigung der aus der Spulenwicklung zu den Anschlüssen hingeführten Drahtenden führen können.

Der Erfindung liegt daher die Aufgabe zugrunde, den gattungsgemäßen Sensor hinsichtlich der Temperaturwechselfestigkeit zu verbessern.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Mit Hilfe der Erfindung kann auf einfache und kostengünstige Weise, nämlich durch Vorsehen einer Barriere für die Umspritzmasse, die Temperaturwechselfestigkeit des Sensors in erheblichem Maße verbessert werden. Versuche haben ergeben, dass eine Verfünffachung der Zyklenzahl von Temperaturwechseln mit Hilfe der Erfindung ohne weiteres möglich wird.

Die Barriere ist dabei zwischen dem aus der Spulenwicklung herausgeführten Drahtende und der Einspritzstelle der Umspritzmasse beim Umspritz-Vorgang anzuordnen, sodass beim Umspritz-Vorgang die Umspritzmasse nicht direkt auf das Drahtende trifft, sondern durch die Barriere zunächst umgeleitet wird und nach Passieren der Barriere in einer veränderten Fließrichtung, verglichen mit einem Sensor ohne Barriere, auf das Drahtende trifft. Gemäß der Erfindung weist die Umspritzmasse nach deren Verfestigung im Bereich des aus der Spulenwicklung herausgeführten Drahtendes, d. h. nach Passieren der Barriere, eine geringere Dichte auf als in den übrigen Bereichen der Umspritzmasse versehenen Bereichen. Gemäß einer vorteilhaften Ausgestaltung verläuft dabei die Molekülorientierung der Umspritzmasse nach deren Verfestigung im Bereich des aus der Spulenwicklung herausgeführten Drahtendes überwiegend quer zu dem Drahtende. Versuche haben nämlich ergeben, dass die üblicher Weise als Umspritzmasse verwendeten Materialien in Richtung ihrer Molekülorientierung einen geringeren Wärmeausdehnungskoeffizienten aufweisen als in anderen Richtungen. Somit kann durch die Umlenkung der Umspritzmasse mittels der Barriere der störende Einfluss des Wärmeausdehnungskoeffizienten der Umspritzmasse weitgehend kompensiert werden. Die Erfindung wird nachfolgend anhand von Zeichnungen unter Nennung weiterer Vorteile ausführlich erläutert.

Es zeigen
- Fig. 1: eine Ausführungsform des Sensors im Längsschnitt und
- Fig. 2: eine elektrische Spulenbaugruppe in Seitenansicht und
- Fig. 3: die Spulenbaugruppe gemäß Fig. 2 in einer Draufsicht und
- Fig. 4 bis 6: verschiedene Schritte bei der Herstellung des Sensors und
- Fig. 7 bis 9: weitere Ausführungsformen der Barriere und
- Fig. 10: eine weitere Ausführungsform des Sensors und
- Fig. 11: eine plattenförmige Barriere und
- Fig. 12: eine weitere Ausführungsform des Sensors.

In den Figuren werden für einander entsprechende Teile gleiche Bezugszeichen verwendet.

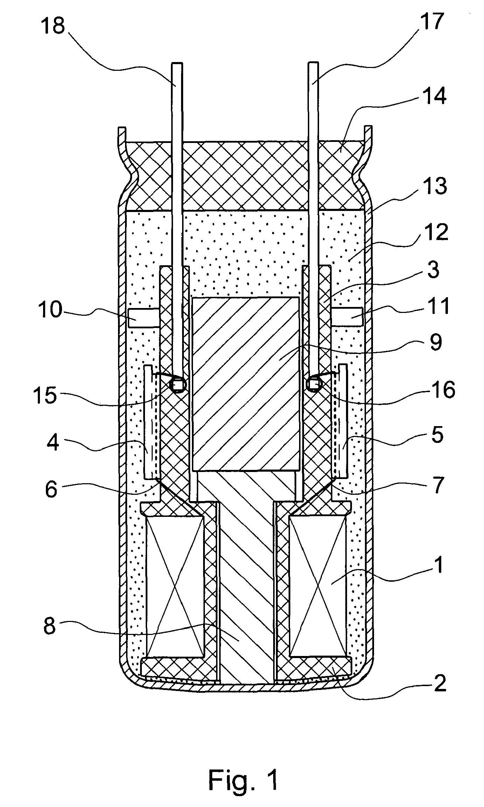

In der Fig. 1 ist eine erste Ausführungsform des erfindungsgemäßen Sensors als Längsschnitt dargestellt. Der Sensor weist eine elektrische Spulenbaugruppe (1, 2, 3) auf, mit einem Spulenkörper (2), auf den eine elektrische Spulenwicklung (1) aus Draht gewickelt ist. Ein erstes und ein zweites Drahtende (6, 7) ist aus der Spulenwicklung (1) heraus zu elektrischen Anschlussstellen (15, 16) geführt und dort mit diesen Anschlussstellen elektrisch verbunden, beispielsweise verlötet oder verschweißt. Die Anschlussstellen (15, 16) sind elektrisch mit Anschlusselementen (17, 18) verbunden bzw. einstückig damit ausgebildet. Die Anschlusselemente (17, 18) dienen zur elektrischen Verbindung des Sensors mit einer elektronischen Auswerteeinheit, z. B. mit dem Steuergerät eines Antiblockiersystems. Die Anschlusselemente (17, 18) sind beispielsweise aus Blechstreifen oder Vierkant-Draht hergestellt.

Die elektrischen Anschlussstellen (15, 16) sind in einem sich in Längsrichtung der Spulenbaugruppe (1, 2, 3) über die Spulenwicklung (1) hinaus erstreckenden Bereich (3) des Spulenkörpers (2) angeordnet. An diesem Bereich (3) des Spulenkörpers (2) befinden sich des Weiteren Führungselemente (4, 5), die zur Befestigung und Führung des aus der Spulenwicklung (1) herausgeführten Drahtendes dienen. Die Führungselemente (4, 5) weisen vorzugsweise eine tangential geöffnete Führungskontur zur Aufnahme des Drahtendes auf. Die Führungskontur kann beispielsweise als ein seitlicher Längsschlitz in dem Führungselement (4, 5) ausgebildet sein, d. h. die Führungselemente (4, 5) können einen im wesentlichen L-förmigen Querschnitt aufweisen.

Innerhalb der Spulenbaugruppe (1, 2, 3) ist ein Permanentmagnet (9) sowie ein abgestufter Polstift (8) aus magnetisch gut leitfähigem Material angeordnet. In der Ausführungsform gemäß Fig. 1 ist der Polstift (8) mit seinem schmalen Ende in dem von der Spulenwicklung (1) umgebenen Bereich angeordnet. Die übrigen Bereiche des Polstiftes (8) sowie der Permanentmagnet (9) sind außerhalb des von der Spulenwicklung (1) umgebenen Bereichs angeordnet. Durch diese Anordnung wird ein hoher Wirkungsgrad, d. h. eine hohe Empfindlichkeit, des Sensors erreicht. Die Erfindung ist jedoch nicht auf diese Art der Anordnung von Permanentmagnet und Polstift beschränkt, sondern kann vorteilhaft auch bei anderen Anordnungen verwendet werden.

Die zuvor beschriebenen Bauelemente des Sensors sind bei der Herstellung des Sensors in einem speziellen Umspritzwerkzeug, was nachfolgend noch näher beschrieben wird, mit einer Umspritzmasse (12) umspritzt worden. Als Umspritzmasse kann vorteilhaft ein Thermoplast, insbesondere ein Polyamid-Material, verwendet werden. Die Umspritzung (12) hat den Vorteil, dass die umspritzten Bauteile besser gegen mechanische Beschädigungen und Feuchtigkeit geschützt sind, als ohne Verwendung der Umspritzung. Eine weitere Erhöhung der mechanischen Festigkeit kann durch Verwendung von Umspritzmassen erzielt werden, die Glaskugel-verstärkt und/oder alternativ Glasfaser-verstärkt sind. Insbesondere durch die Glasfaser-Verstärkung ist eine weitere wesentliche Erhöhung der mechanischen Stabilität möglich. Die Umspritzung hat den weiteren Vorteil, dass der Polstift (8) sowie der Permanentmagnet (9) hierdurch fixiert werden.

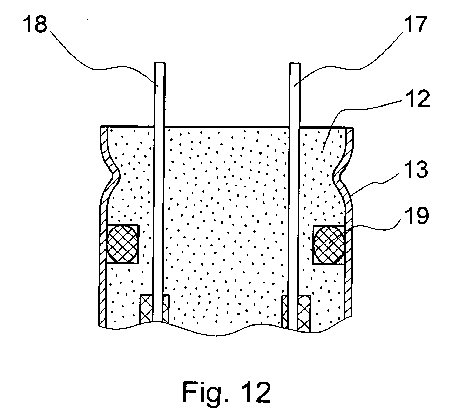

Die solchermaßen umspritzte Baueinheit ist in einem topfartigen Gehäuse (13) angeordnet. Das Gehäuse (13) kann beispielsweise als Tiefziehteil aus Metall ausgebildet sein. Das Gehäuse (13) ist durch ein Verschlussstück (14), das formschlüssig in das einseitig offene Gehäuse (13) eingepresst ist, feuchtigkeitsdicht verschlossen. Gemäß einer alternativen Ausgestaltung ist statt des separaten Verschlussstücks (14) der dafür vorgesehene Raum im wesentlichen ebenfalls mit der Umspritzmasse (12) aufgefüllt und zur Abdichtung eine ringförmige Dichtung (19) zwischen der Umspritzmasse und dem Gehäuse (13) vorgesehen, wie in der Fig. 12 ausschnittsweise dargestellt ist. Zur Einformung des ringförmigen Aufnahmeraums für die Dichtung (19) in die Umspritzmasse (12) ist in dem für den Umspritz-Vorgang zu verwendenden Umspritzwerkzeug eine komplementäre Kontur vorgesehen.

In dem Bereich (3) des Spulenkörpers sind Barrieren (10, 11) vorgesehen, die zwischen dem aus der Spulenwicklung (1) herausgeführten Drahtende (6, 7) und der Einspritzstelle der Umspritzmasse (12) beim Umspritz-Vorgang angeordnet sind. Auf die Anordnung und Wirkungsweise der Barrieren (10, 11) wird nachfolgend noch näher eingegangen.

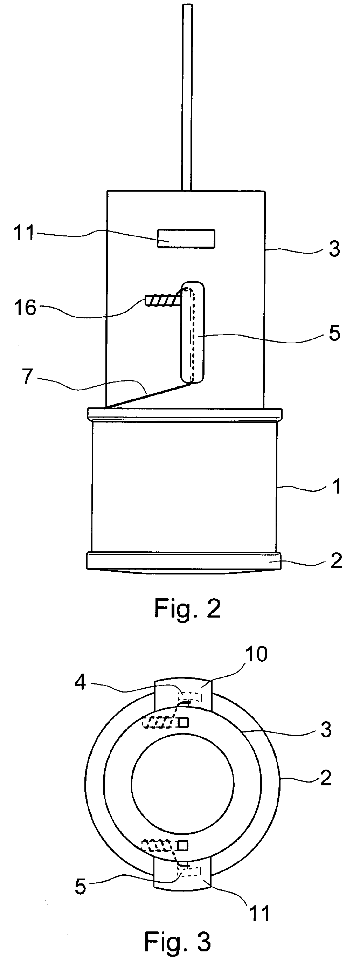

Die Fig. 2 zeigt die Spulenbaugruppe (1, 2, 3) vor Durchführung des Umspritz-Vorgangs, jedoch nach Aufbringung der Spulenwicklung (1). Die Spulenbaugruppe (1, 2, 3) ist gegenüber der Schnittdarstellung der Fig. 1 um eine viertel Umdrehung um die Längsachse gedreht dargestellt, d. h. die Barriere (11) sowie das Führungselement (5) sind in Draufsicht erkennbar. Die weitere Barriere (10) sowie das weitere Führungselement (4) befinden sich auf der Rückseite des Bereichs (3) und sind aus diesem Grund in Fig. 2 nicht erkennbar.

Fig. 3 zeigt die Spulenbaugruppe (1, 2, 3) gemäß Fig. 2 in einer Draufsicht in Richtung des Bereichs (3) des Spulenkörpers (2). In dieser Ansicht verdecken die Barrieren (10, 11) die aus diesem Grunde gestrichelt angedeuteten Führungselemente (4, 5). Wie jedoch erkennbar ist, werden die Drahtenden (6, 7) jeweils in einem Längsschlitz der Führungselemente (4, 5) geführt. Erkennbar ist außerdem der im wesentlichen L-förmige Querschnitt der Führungselemente (4, 5).

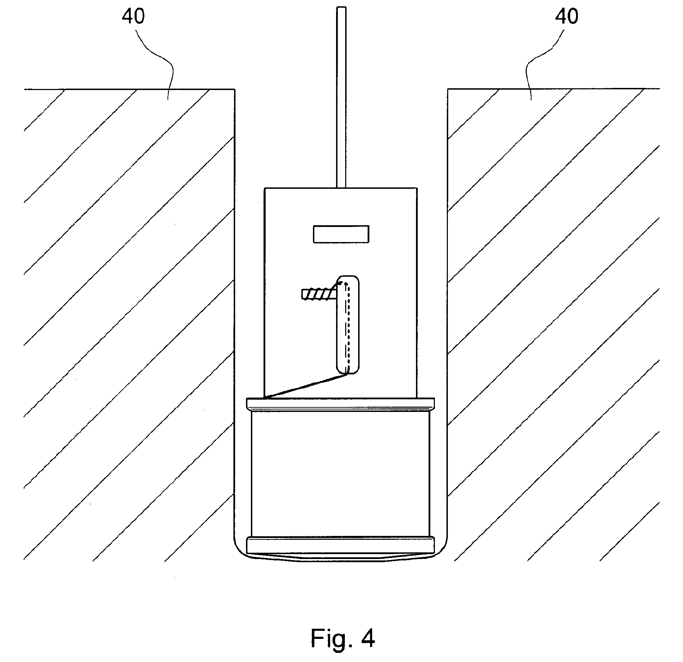

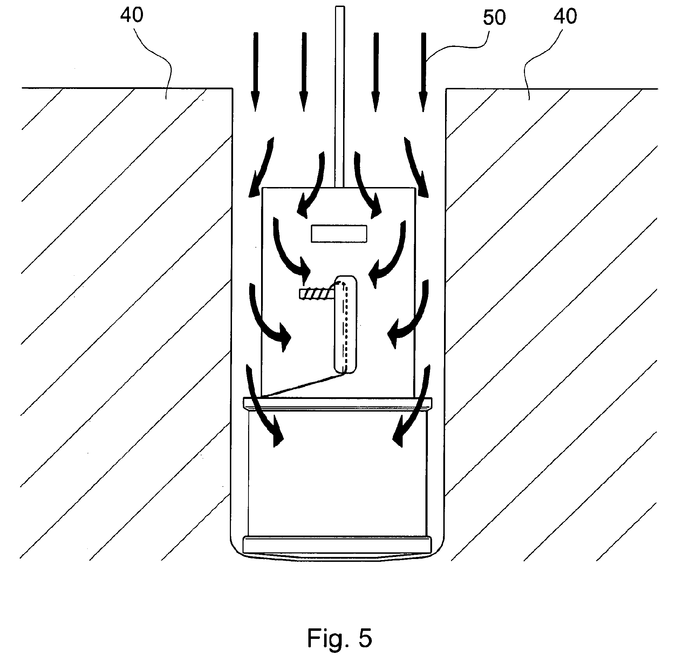

In der Fig. 4 ist die Spulenbaugruppe (1, 2, 3) gemäß Fig. 2 dargestellt, nachdem sie in ein Umspritzwerkzeug (40) eingeführt wurde. Der Polstift (8) sowie der Permanentmagnet (9) befinden sich bereits im Inneren des Spulenkörpers (2). Das Umspritzwerkzeug (40) weist eine Aufnahmeöffnung für die Spulenbaugruppe (1, 2, 3) auf, deren Innenabmessungen an die Innenabmessungen des Gehäuses (13) angepasst sind. In der Fig. 5 ist der Beginn des Umspritz-Vorgangs dargestellt. Die flüssige Umspritzmasse wird dort durch Pfeile (50) symbolisiert, die die Fließrichtung der Umspritzmasse darstellen. Wie erkennbar ist, bewirken die Barrieren (10, 11) eine Ablenkung der Fließrichtung der Umspritzmasse zunächst fort von den hinter den Barrieren (10, 11) befindlichen Drahtenden (6, 7). Hinter der jeweiligen Barriere fließt die Umspritzmasse dann im wesentlichen rechtwinklig auf das entlang der Führungselemente (4, 5) verlegte Drahtende (6, 7) zu. Die sich aufgrund der Barriere (10, 11) links und rechts davon bildenden zwei Strömungen der Umspritzmasse treffen dann im Bereich des entlang der Führungselemente (4, 5) verlegten Drahtendes (6, 7) aufeinander. Hierdurch kann eine geringere Dichte der Umspritzmasse im Bereich der Anschlussstellen (15, 16) und der außerhalb der Spulenwicklung (1) verlegten Drahtenden (6, 7) erreicht werden. Weiterhin wird in diesen Bereichen eine Molekülorientierung der Umspritzmasse nach deren Verfestigung überwiegend quer zu den Drahtenden (6, 7) erreicht.

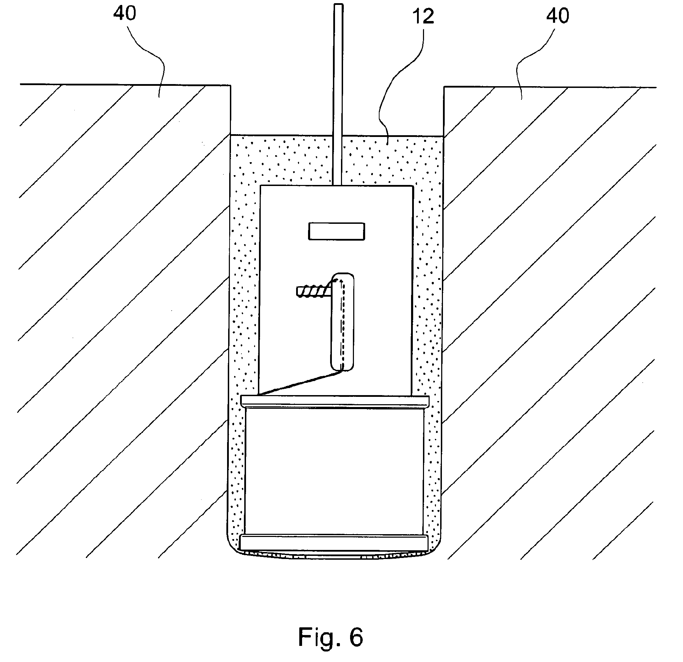

Fig. 6 zeigt die fertig umspritzte Baugruppe mit der ausgehärteten Umspritzmasse (12). Diese Baugruppe kann nun aus dem Umspritzwerkzeug (40) entnommen werden und in dem Gehäuse (13) angeordnet werden.

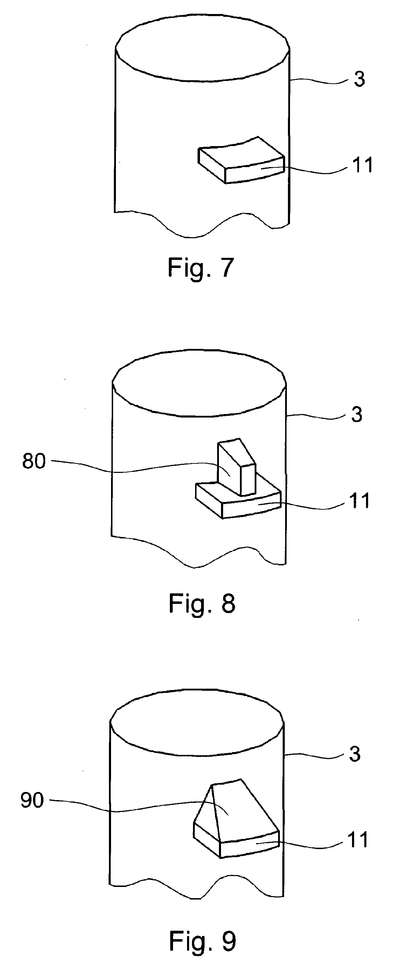

In den Fig. 7 bis 9 ist der Bereich (3) des Spulenkörpers (2) jeweils ausschnittsweise perspektivisch dargestellt. Fig. 7 zeigt eine erste Ausführungsform der Barriere (11), wie sie bei dem Sensor gemäß Fig. 1 bereits dargestellt wurde. Die Ausführungsform der Barriere (11) gemäß Fig. 7 weist einen im wesentlichen rechteckigen Querschnitt auf, mit einem zum Außenende der Barriere (11) abgerundeten Ende. Der Radius des abgerundeten Endes ist vorzugsweise an den Innenradius des Gehäuses (13) angepasst.

Die Fig. 8 zeigt eine zweite Ausführungsform der Barriere (11), die gegenüber der Ausführungsform gemäß Fig. 7 um eine in Längsrichtung der Spulenbaugruppe (1, 2, 3) verlaufende Rippe (80) erweitert ist. Die Rippe (80) bewirkt eine Versteifung der Barriere (11). Des Weiteren beeinflusst die Rippe (80) den Strömungsverlauf der Umspritzmasse beim Umspritz-Vorgang in der Weise günstig, dass eine weitere Verbesserung der Temperaturwechselfestigkeit des Sensors erzielt werden kann.

Die Ausführungsform der Barriere (11) gemäß Fig. 9 weist eine auf der von der Spulenwicklung (1) abgewandten Seite angeordnete radial und tangential rampenartige Führungskontur (90) auf. Die Führungskontur (90) bewirkt eine weitere Verbesserung des Strömungsverlaufs der Umspritzmasse und hierdurch eine weitere Verbesserung der Temperaturwechselfestigkeit des Sensors.

Die obigen Ausführungen gelten selbstverständlich auch für die andere Barriere (10).

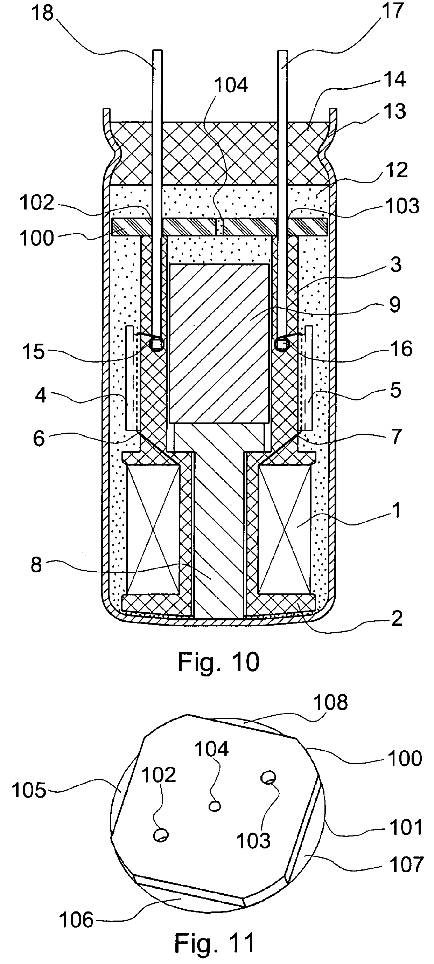

In der Fig. 10 ist eine zweite Ausführungsform des erfindungsgemäßen Sensors im Längsschnitt dargestellt. Im Unterschied zu der Ausführungsform gemäß Fig. 1 sind gemäß Fig. 10 statt der Barrieren (10, 11) eine plattenförmige Barriere (100) vorgesehen. Die plattenförmige Barriere (100) kann, wie in Fig. 10 dargestellt, als separates Bauteil ausgebildet sein, das oberhalb des Bereichs (3) des Spulenkörpers (2) angeordnet ist. Die Barriere (100) kann jedoch auch einstückig mit dem Spulenkörper (2) ausgebildet sein. Die Fig. 11 zeigt die plattenförmige Barriere (100) in perspektivischer Darstellung. Wie erkennbar ist, zeigt die Fig. 11 eine Ausführungsform der Barriere (100) als im wesentlichen quadratische Platte mit abgerundeten Ecken, wobei die Radien der Ecken an den Innenradius des Gehäuses (13) angepasst sind. Der Innenradius des Gehäuses (13) ist in der Fig. 11 durch die Linie (101) angedeutet. Die Barriere (100) weist Öffnungen (102, 103) zur Durchführung der Anschlusselemente (17, 18) auf. Des Weiteren ist eine Durchtrittsöffnung (104) vorgesehen, durch die die Umspritzmasse beim Umspritz-Vorgang zu dem Permanentmagneten (9) und dem Polstift (8) gelangen kann.

Beim Umspritz-Vorgang strömt die Umspritzmasse bei Verwendung der Barriere (100) außen an dieser vorbei, und zwar durch die sich aufgrund der quadratischen Außenkontur der Barriere (100) ergebenden Kreisabschnitt-förmigen Öffnungen (105, 106, 107, 108) zwischen der Barriere (100) und dem Umspritzwerkzeug (40). Außerdem strömt die Umspritzmasse durch die Durchtrittsöffnung (104) zu dem Permanentmagneten (9) und dem Polstift (8) und fixiert diese.

## Patentansprüche

1. Induktiver Sensor mit einer elektrischen Spulenbaugruppe (1, 2, 3), die einen Spulenkörper (2) und eine Spulenwicklung (1) aus Draht aufweist, wobei wenigstens ein Drahtende (6, 7) aus der Spulenwicklung (1) heraus zu elektrischen Anschlusselementen (17, 18), die zur Verbindung der Spulenbaugruppe (1, 2, 3) mit der Umgebung dienen, hin geführt ist, wobei die Spulenbaugruppe (1, 2, 3) wenigstens teilweise mit einer Umspritzmasse (12) umspritzt ist und in einem topfartigen Gehäuse (13) angeordnet ist, wobei im Bereich des aus der Spulenwicklung (1) herausgeführten Drahtendes (6, 7) wenigstens eine Barriere (10, 11, 100) vorgesehen ist, die zwischen dem aus der Spulenwicklung (1) herausgeführten Drahtende (6, 7) und der Einspritzstelle der Umspritzmasse (12) beim Umspritz-Vorgang angeordnet ist, **dadurch gekennzeichnet, dass** die Umspritzmasse (12) nach deren Verfestigung im Bereich des aus der Spulenwicklung (1) herausgeführten Drahtendes (6, 7) eine geringere Dichte aufweist als in den übrigen mit der Umspritzmasse (12) versehenen Bereichen.

2. Sensor nach wenigstens einem der vorhergehenden Ansprüche, **dadurch gekennzeichnet, dass** die Molekülorientierung der Umspritzmasse (12) nach deren Verfestigung im Bereich des aus der Spulenwicklung (1) herausgeführten Drahtendes (6, 7) überwiegend quer zu dem Drahtende verläuft.

3. Sensor nach wenigstens einem der vorhergehenden Ansprüche, **dadurch gekennzeichnet, dass** das topfartige Gehäuse (13) aus Metall ist.

4. Sensor nach wenigstens einem der vorhergehenden Ansprüche, **dadurch gekennzeichnet, dass** die Spulenbaugruppe (1, 2, 3) vollständig mit der Umspritzmasse (12) umspritzt ist.

5. Sensor nach wenigstens einem der vorhergehenden Ansprüche, **dadurch gekennzeichnet, dass** die Umspritzmasse (12) Glaskugel-verstärkt ist.

6. Sensor nach wenigstens einem der vorhergehenden Ansprüche, **dadurch gekennzeichnet, dass** die Umspritzmasse (12) Glasfaser-verstärkt ist.

7. Sensor nach Anspruch 6, **dadurch gekennzeichnet, dass** die Faserrichtung der Umspritzmasse (12) nach deren Verfestigung im Bereich des aus der Spulenwicklung (1) herausgeführten Drahtendes (6, 7) überwiegend quer zu dem Drahtende verläuft.

8. Sensor nach wenigstens einem der vorhergehenden Ansprüche, **dadurch gekennzeichnet, dass** ein Anschlusselement (17, 18) jeweils eine Anschlussstelle (15, 16) zum Anschluss des Drahtendes aufweist, die bezüglich der Längserstreckung der Spulenbaugruppe (1, 2, 3) zwischen der Barriere (10, 11, 100) und der Spulenwicklung (1) angeordnet ist.

9. Sensor nach Anspruch 8, **dadurch gekennzeichnet, dass** die Umspritzmasse (12) nach deren Verfestigung im Bereich der Anschlussstelle (15, 16) eine geringere Dichte aufweist als in den übrigen mit der Umspritzmasse (12) versehenen Bereichen.

10. Sensor nach wenigstens einem der Ansprüche 8 bis 9, **dadurch gekennzeichnet, dass** die Molekülorientierung der Umspritzmasse (12) nach deren Verfestigung im Bereich des aus der Spulenwicklung (1) herausgeführten Drahtendes (6, 7) überwiegend quer zur flächigen Ausdehnung der Anschlussstelle (15, 16) verläuft.

11. Sensor nach wenigstens einem der Ansprüche 8 bis 10, **dadurch gekennzeichnet, dass** die Faserrichtung der Umspritzmasse (12) nach deren Verfestigung im Bereich der Anschlussstelle (15, 16) überwiegend quer zur flächigen Ausdehnung der Anschlussstelle verläuft.

12. Sensor nach wenigstens einem der vorhergehenden Ansprüche, **dadurch gekennzeichnet, dass** die Barriere (10, 11, 100) so ausgebildet ist, dass sie die Flussrichtung der Umspritzmasse beim Umspritz-Vorgang nach Passieren der Barriere annähernd rechtwinklig ablenkt.

13. Sensor nach wenigstens einem der vorhergehenden Ansprüche, **dadurch gekennzeichnet, dass** sich die Barriere (10, 11 , 100) in radialer Richtung wenigstens annähernd bis zur Mantelfläche der Umspritzmasse (12) erstreckt.

14. Sensor nach wenigstens einem der vorhergehenden Ansprüche, **dadurch gekennzeichnet, dass** die Barriere (10, 11, 100) wenigstens eine rampenartige Führungskontur (90) zur Führung der Umspritzmasse beim Umspritz-Vorgang aufweist.

15. Sensor nach wenigstens einem der vorhergehenden Ansprüche, **dadurch gekennzeichnet, dass** sich der Spulenkörper (2) in Längsrichtung der Spulenbaugruppe (1, 2, 3) über die Spulenwicklung (1) hinaus erstreckt und die Barriere (10, 11, 100) im sich darüber hinaus erstreckenden Bereich (3) angeordnet ist.

16. Sensor nach Anspruch 15, **dadurch gekennzeichnet, dass** das aus der Spulenwicklung (1) herausgeführte Drahtende (6, 7) entlang des sich über die Spulenwicklung (1) hinaus erstreckenden Bereichs (3) des Spulenkörpers (2) verlegt ist.

17. Sensor nach wenigstens einem der Ansprüche 15 bis 16, **dadurch gekennzeichnet, dass** am sich über die Spulenwicklung (1) hinaus erstreckenden Bereich (3) des Spulenkörpers (2) wenigstens ein Führungselement (4, 5) zur Führung des Drahtendes (6, 7) angeordnet ist.

18. Sensor nach Anspruch 17, **dadurch gekennzeichnet, dass** das Führungselement (4, 5) eine tangential geöffnete Führungskontur zur Aufnahme des Drahtendes (6, 7) aufweist.

19. Sensor nach wenigstens einem der vorhergehenden Ansprüche, **dadurch gekennzeichnet, dass** die Barriere (100) als plattenförmiges Bauteil ausgebildet ist.

20. Sensor nach wenigstens einem der vorhergehenden Ansprüche, **dadurch gekennzeichnet, dass** als Umspritzmasse (12) ein Thermoplast, insbesondere Polyamid, verwendet wird.

21. Verfahren zur Herstellung eines induktiven Sensors mit einer elektrischen Spulenbaugruppe (1, 2, 3), die einen Spulenkörper (2) und eine Spulenwicklung (1) aus Draht aufweist, wobei wenigstens ein Drahtende (6, 7) aus der Spulenwicklung (1) heraus zu elektrischen Anschlusselementen (17, 18), die zur Verbindung der Spulenbaugruppe (1, 2, 3) mit der Umgebung dienen, hin geführt ist, **dadurch gekennzeichnet, dass** die Spulenbaugruppe (1, 2, 3) in ein Umspritzwerkzeug (40) eingeführt wird und flüssige Umspritzmasse in das Umspritzwerkzeug eingeführt wird, wobei während dieses Umspritz-Vorgangs mittels wenigstens einer Barriere (10, 11, 100), die zwischen dem aus der Spulenwicklung (1) heraus geführten Drahtende (6, 7) und der Einspritzstelle der Umspritzmasse (12) beim Umspritz-Vorgang angeordnet ist, die Umspritzmasse in jeweils zwei Teilströme aufgeteilt wird, wobei hinter der jeweiligen Barriere die Umspritzmasse dann im Wesentlichen rechtwinklig auf das jeweils entlang eines Führungselements (4, 5) verlegte Drahtende (6, 7) jeweils zu fließt, wobei die Teilströme dann im Bereich des entlang des jeweiligen Führungselements (4, 5) verlegten Drahtendes (6, 7) aufeinander treffen, sodass die Umspritzmasse (12) nach deren Verfestigung im Bereich des aus der Spulenwicklung (1) heraus geführten Drahtendes (6, 7) eine geringere Dichte aufweist als in den übrigen mit der Umspritzmasse (12) versehenen Bereichen.

## Claims

1. Inductive sensor having an electric coil assembly (1, 2, 3) which has a coil former (2) and a coil winding (1) made of wire, wherein at least one wire end (6, 7) is led out of the coil winding (1) to electrical connecting elements (17, 18) which serve to connect the coil assembly (1, 2, 3) to the surroundings, wherein the coil assembly (1, 2, 3) is at least partially encapsulated by injection moulding with an injection moulding encapsulation material (12) and is arranged in a pot-like housing (13), wherein at least one barrier (10, 11, 100) is provided in the region of the wire end (6, 7) which is led out of the coil winding (1), said barrier (10, 11, 100) being arranged between the wire end (6, 7) led out of the coil winding (1) and the injection point of the injection moulding encapsulation material (12) during the injection moulding encapsulation process, **characterized in that** the injection moulding encapsulation material (12) has, after its solidification, a lower density in the region of the wire end (6, 7) led out of the coil winding (1) than in the other regions provided with the injection moulding encapsulation material (12).

2. Sensor according to at least one of the preceding claims, **characterized in that** the molecular orientation of the injection moulding encapsulation material (12) extends, after its solidification, predominantly transversely with respect to the wire end in the region of the wire end (6, 7) led out of the coil winding (1).

3. Sensor according to at least one of the preceding claims, **characterized in that** the pot-like housing (13) is made of metal.

4. Sensor according to at least one of the preceding claims, **characterized in that** the coil assembly (1, 2, 3) is encapsulated by injection moulding completely with the injection moulding encapsulation material (12).

5. Sensor according to at least one of the preceding claims, **characterized in that** the injection moulding encapsulation material (12) is reinforced by glass globes.

6. Sensor according to at least one of the preceding claims, **characterized in that** the injection moulding encapsulation material (12) is reinforced by glass fibres.

7. Sensor according to Claim 6, **characterized in that** the fibre direction of the injection moulding encapsulation material (12) extends, after its solidification, predominantly transversely with respect to the wire end in the region of the wire end (6, 7) led out of the coil winding (1).

8. Sensor according to at least one of the preceding claims, **characterized in that** a connecting element (17, 18) has in each case a connecting point (15, 16) for connecting the wire end, which connecting point (15, 16) is arranged, with respect to the longitudinal extent of the coil assembly (1, 2, 3), between the barrier (10, 11, 100) and the coil winding (1).

9. Sensor according to Claim 8, **characterized in that** the injection moulding encapsulation material (12) has, after its solidification, a lower density in the region of the connecting point (15, 16) than in the other regions provided with the injection moulding encapsulation material (12).

10. Sensor according to at least one of Claims 8 to 9, **characterized in that** the molecular orientation of the injection moulding encapsulation material (12) extends, after its solidification, predominantly transversely with respect to the planar extent of the connecting point (15, 16) in the region of the wire end (6, 7) led out of the coil winding (1).

11. Sensor according to at least one of Claims 8 to 10, **characterized in that** the fibre direction of the injection moulding encapsulation material (12) extends, after its solidification, predominantly transversely with respect to the planar extent of the connecting point in the region of the connecting point (15, 16).

12. Sensor according to at least one of the preceding claims, **characterized in that** the barrier (10, 11, 100) is embodied in such a way that it deflects the direction of flow of the injection moulding encapsulation material during the injection moulding encapsulation process approximately at a right angle after the barrier has been passed.

13. Sensor according to at least one of the preceding claims, **characterized in that** the barrier (10, 11, 100) extends at least approximately as far as the lateral surface of the injection moulding encapsulation material (12) in the radial direction.

14. Sensor according to at least one of the preceding claims, **characterized in that** the barrier (10, 11, 100) has at least a ramp-like guiding contour (90) for guiding the injection moulding encapsulation material during the injection moulding encapsulation process.

15. Sensor according to at least one of the preceding claims, **characterized in that** the coil former (2) extends beyond the coil winding (1) in the longitudinal direction of the coil assembly (1, 2, 3), and the barrier (10, 11, 100) is arranged in the region (3) which extends beyond said coil winding (1).

16. Sensor according to Claim 15, **characterized in that** the wire end (6, 7) led out of the coil winding (1) is positioned along the region (3) of the coil former (2) which extends beyond the coil winding (1).

17. Sensor according to at least one of Claims 15 to 16, **characterized in that** at least one guiding element (4, 5) for guiding the wire end (6, 7) is arranged on the region (3) of the coil former (2) which extends beyond the coil winding (1).

18. Sensor according to Claim 17, **characterized in that** the guiding element (4, 5) has a tangentially opened guiding contour for receiving the wire end (6, 7).

19. Sensor according to at least one of the preceding claims, **characterized in that** the barrier (100) is embodied as a plate-shaped component.

20. Sensor according to at least one of the preceding claims, **characterized in that** a thermoplastic, in particular a polyamide, is used as injection moulding encapsulation material (12).

21. Method for manufacturing an inductive sensor having an electric coil assembly (1, 2, 3) which has a coil former (2) and a coil winding (1) made of wire, wherein at least one wire end (6, 7) is led out of the coil winding (1) to electrical connecting elements (17, 18) which serve to connect the coil assembly (1, 2, 3) to the surroundings, **characterized in that** the coil assembly (1, 2, 3) is introduced into an injection moulding encapsulation tool (40) and liquid injection moulding encapsulation material is introduced into the injection moulding encapsulation tool, wherein during this injection moulding encapsulation process the injection moulding encapsulation material is divided into, in each case, two partial flows by means of at least one barrier (10, 11, 100) which is arranged between the wire end (6, 7) led out of the coil winding (1) and the injection point of the injection moulded encapsulation material (12) during the injection moulding encapsulation process, wherein behind the respective barrier the injection moulded encapsulation material then essentially flows at right angles to the respective wire end (6, 7) laid along a guiding element (4, 5), wherein the partial flows then meet in the region of the wire end (6, 7) laid along the respective guiding element (4, 5) in such a manner that the injection moulding encapsulation material (12) has, after its solidification, a lower density in the region of the wire end (6, 7) led out of the coil winding (1) than in the other regions provided with the injection moulding encapsulation material (12).

## Revendications

1. Capteur inductif avec un ensemble de bobines électrique (1, 2, 3), qui comporte un corps de bobine (2) et un enroulement de bobine (1) à base de fil métallique, au moins une extrémité du fil métallique (6, 7) étant amenée à partir de l'enroulement de bobine (1) vers des éléments de connexion électriques (17, 18) qui servent à relier l'ensemble de bobines (1, 2, 3) à l'environnement, l'ensemble de bobines (1, 2, 3) étant au moins en partie enrobé avec une masse d'enrobage (12) et disposé dans un logement en forme de creuset (13), au moins une barrière (10, 11, 100) étant prévue dans la zone de l'extrémité du fil métallique (6, 7) sortie de l'enroulement de bobine (1), barrière qui est disposée entre l'extrémité du fil métallique (6, 7) sortie de l'enroulement de bobine (1) et le point d'injection de la masse d'enrobage (12) lors de l'opération d'enrobage, **caractérisé en ce que** la masse d'enrobage (12) après solidification de celle-ci dans la zone de l'extrémité du fil métallique (6, 7) sortie de l'enroulement de bobine (1) présente une densité plus faible que dans les autres zones dotées de la masse d'enrobage (12).

2. Capteur selon au moins l'une quelconque des revendications précédentes, **caractérisé en ce que** l'orientation moléculaire de la masse d'enrobage (12) après solidification de celle-ci dans la zone de l'extrémité du fil métallique (6, 7) sortie de l'enroulement de bobine (1) passe essentiellement transversalement à l'extrémité du fil métallique.

3. Capteur selon au moins l'une quelconque des revendications précédentes, **caractérisé en ce que** le logement en forme de creuset (13) est en métal.

4. Capteur selon au moins l'une quelconque des revendications précédentes, **caractérisé en ce que** l'ensemble de bobines (1, 2, 3) est complètement enrobé avec la masse d'enrobage (12).

5. Capteur selon au moins l'une quelconque des revendications précédentes, **caractérisé en ce que** la masse d'enrobage (12) est renforcée avec des billes de verre.

6. Capteur selon au moins l'une quelconque des revendications précédentes, **caractérisé en ce que** la masse d'enrobage (12) est renforcée avec des fibres de verre.

7. Capteur selon la revendication 6, **caractérisé en ce que** la direction des fibres de la masse d'enrobage (12) après solidification de celle-ci dans la zone de l'extrémité du fil métallique (6, 7) sortie de l'enroulement de bobine (1) passe essentiellement transversalement à l'extrémité du fil métallique.

8. Capteur selon au moins l'une quelconque des revendications précédentes, **caractérisé en ce qu'**un élément de connexion (17, 18) comporte respectivement un point de connexion (15, 16) pour raccorder l'extrémité du fil métallique, qui est disposé entre la barrière (10, 11, 100) et l'enroulement de bobine (1) par rapport à l'extension longitudinale de l'ensemble de bobines (1, 2, 3).

9. Capteur selon la revendication 8, **caractérisé en ce que** la masse d'enrobage (12) après la solidification de celle-ci dans la zone du point de connexion (15, 16) présente une densité plus faible que dans les autres zones dotées de la masse d'enrobage (12).

10. Capteur selon au moins l'une quelconque des revendications 8 à 9, **caractérisé en ce que** l'orientation moléculaire de la masse d'enrobage (12) après solidification de celle-ci dans la zone de l'extrémité du fil métallique (6, 7) sortie de l'enroulement de bobine (1) passe essentiellement transversalement à l'extension plane du point de connexion (15, 16).

11. Capteur selon au moins l'une quelconque des revendications 8 à 10, **caractérisé en ce que** la direction des fibres de la masse d'enrobage (12) après la solidification de celle-ci dans la zone du point de connexion (15, 16) passe essentiellement transversalement à l'extension plane du point de connexion.

12. Capteur selon au moins l'une quelconque des revendications précédentes, **caractérisé en ce que** la barrière (10, 11, 100) est constituée de telle manière qu'elle dévie à peu près perpendiculairement la direction d'écoulement de la masse d'enrobage lors de l'opération d'enrobage après passage de la barrière.

13. Capteur selon au moins l'une quelconque des revendications précédentes, **caractérisé en ce que** la barrière (10, 11, 100) s'étend dans le sens radial au moins à peu près jusqu'à la surface d'enveloppe de la masse d'enrobage (12).

14. Capteur selon au moins l'une quelconque des revendications précédentes, **caractérisé en ce que** la barrière (10, 11, 100) présente au moins un contour de guidage (90) en forme de rampe pour guider la masse d'enrobage lors de l'opération d'enrobage.

15. Capteur selon au moins l'une quelconque des revendications précédentes, **caractérisé en ce que** le corps de bobine (2) s'étend dans le sens longitudinal de l'ensemble de bobines (1, 2, 3) en dehors de l'enroulement de bobine (1) et la barrière (10, 11, 100) est disposée dans la zone (3) s'étendant au-delà.

16. Capteur selon la revendication 15, **caractérisé en ce que** l'extrémité du fil métallique (6, 7) sortie de l'enroulement de bobine (1) est posée le long de la zone (3) du corps de bobine (2) s'étendant en dehors de l'enroulement de bobine (1).

17. Capteur selon au moins l'une quelconque des revendications 15 à 16, **caractérisé en ce qu'**au moins un élément de guidage (4, 5) est disposé sur la zone (3) du corps de bobine (2) s'étendant en dehors de l'enroulement de bobine (1) pour guider l'extrémité du fil métallique (6, 7).

18. Capteur selon la revendication 17, **caractérisé en ce que** l'élément de guidage (4, 5) présente un contour de guidage tangentiellement ouvert pour loger l'extrémité du fil métallique (6, 7).

19. Capteur selon au moins l'une quelconque des revendications précédentes, **caractérisé en ce que** la barrière (100) est constituée comme un composant en forme de plaque.

20. Capteur selon au moins l'une quelconque des revendications précédentes, **caractérisé en ce qu'**un thermoplastique, en particulier un polyamide, est utilisé comme masse d'enrobage (12).

21. Procédé destiné à fabriquer un capteur inductif avec un ensemble de bobines électrique (1, 2, 3), qui comporte un corps de bobine (2) et un enroulement de bobine (1) à base de fil métallique, au moins une extrémité du fil métallique (6, 7) étant amenée à partir de l'enroulement de bobine (1) vers des éléments de connexion électriques (17, 18) qui servent à relier l'ensemble de bobines (1, 2, 3) à l'environnement, **caractérisé en ce que** l'ensemble de bobines (1, 2, 3) est introduit dans un outil d'enrobage (40) et une masse d'enrobage liquide est introduite dans l'outil d'enrobage, pendant cette opération d'enrobage au moyen d'au moins une barrière (10, 11, 100), qui est disposée entre l'extrémité du fil métallique (6, 7) sortie de l'enroulement de bobine (1) et le point d'injection de la masse d'enrobage (12) lors de l'opération d'enrobage, la masse d'enrobage est respectivement divisée en deux courants partiels, la masse d'enrobage affluant respectivement ensuite derrière la barrière respective pour l'essentiel perpendiculairement sur l'extrémité du fil métallique (6, 7) posée respectivement le long d'un élément de guidage (4, 5), les courants partiels se rencontrant ensuite dans la zone de l'extrémité du fil métallique (6, 7) posée le long de l'élément de guidage (4, 5) respectif de manière que la masse d'enrobage (12) après solidification de celle-ci dans la zone de l'extrémité du fil métallique (6, 7) sortie de l'enroulement de bobine (1), présente une densité plus faible que dans les autres zones dotées de la masse d'enrobage (12).
